# EUROPÄISCHE PATENTSCHRIFT

(11) **EP 3 676 933 B1**
(45) Veröffentlichungstag und Bekanntmachung des Hinweises auf die Patenterteilung: **06.12.2023**
(21) Anmeldenummer: 18765409.0
(22) Anmeldetag: 30.08.2018
(51) Int. Cl.: H02J 7/34

(54) **VORRICHTUNG ZUM ELEKTROPOLIEREN EINES ZUMINDEST EINE LITHIUM-IONEN-ZELLE AUFWEISENDEN ENERGIESPEICHERS, LADEGERÄT, VERFAHREN ZUM BETREIBEN DES LADEGERÄTS**
DEVICE FOR ELECTROPOLISHING AN ENERGY STORAGE DEVICE COMPRISING AT LEAST ONE LITHIUM ION CELL, CHARGER, AND METHOD FOR OPERATING THE CHARGER
DISPOSITIF D'ÉLECTROPOLISSAGE D'UN ACCUMULATEUR D'ÉNERGIE PRÉSENTANT AU MOINS UN ÉLÉMENT AU LITHIUM-ION, APPAREIL DE CHARGE ET PROCÉDÉ DE FONCTIONNEMENT DE L'APPAREIL DE CHARGE

(30) Priorität: 31.08.2017 DE 102017215295
(43) Veröffentlichungstag der Anmeldung: 08.07.2020
(73) Patentinhaber: Volkswagen Aktiengesellschaft, 38440 Wolfsburg (DE); Audi AG, 85057 Ingolstadt (DE); Dr.Ing. H.C. F. Porsche Aktiengesellschaft, 70435 Stuttgart (DE)
(72) Erfinder: LEMKE, Andreas, 39365 Ummendorf (DE); HERRMANN, Mirko, Mountain View California 94041 (US)
(74) Vertreter: Clarenbach, Carl-Philipp
(86) Internationale Anmeldenummer: PCT/EP2018/073396
(87) Internationale Veröffentlichungsnummer: WO 2019/043120

(56) Entgegenhaltungen:
- WO-A1-2017/014487
- DE-A1- 2 929 261
- DE-A1-102011 087 496

## Beschreibung

Die Erfindung betrifft eine Vorrichtung zum Elektropolieren eines zumindest eine Lithium-Ionen-Zelle aufweisenden Energiespeichers. Weiterhin betrifft die Erfindung ein Ladegerät sowie ein Verfahren zum Betreiben eines solchen Ladegeräts.

Vorrichtungen und Verfahren zum Aufladen elektrischer Energiespeicher sind aus dem Stand der Technik bekannt. Mit der zunehmenden Elektrifizierung von Kraftfahrzeugen nehmen jedoch die Anforderungen sowohl an die Energiespeicher als auch an die Ladeverfahren zu, sowohl in Bezug auf Sicherheit als auch in Bezug auf Dauerhaltbarkeit und Belastbarkeit. In heutigen Kraftfahrzeugen mit einem elektrischen Antriebsstrang werden häufig Energiespeicher auf Basis von Lithium-Ionen-Zellen eingesetzt, die ein hohes Leistungspotenzial gewährleisten. Dabei sind in einem elektrischen Energiespeicher beziehungsweise Batteriemodul einzelne Lithium-Ionen-Zellen in Reihe und/oder parallel zueinander verschaltet. Im Normalbetrieb wird die in den Zellen gespeicherte elektrische Energie von Verbrauchern, insbesondere eine oder mehrere Elektromaschinen, des Kraftfahrzeugs aufgebraucht. Durch einen generatorischen Betrieb des Antriebssystems ist ein Aufladen der Energiespeicher während der Fahrt möglich, wobei hier üblicherweise eher geringe Ladeströme erreicht werden können, wodurch sich die Aufladezeit für die Lithium-Ionen-Zellen entsprechend in die Länge zieht.

Außerdem ist es bekannt, die Energiespeicher durch ein externes Ladegerät mit elektrischer Energie zu versorgen. Hierdurch ist auch ein Schnellladen möglich, das in kurzer Zeit einen Weiterbetrieb der Antriebseinrichtung gewährleisten soll. Um die Ladezeit zu verkürzen, wird dabei der Ladestrom erhöht, was jedoch negative Auswirkungen auf die Lebensdauer des Energiespeichers mit sich bringt. Ein hoher Ladestrom führt dazu, dass es in der Zelle zu metallischen Lithium-Abscheidungen (Li-Plating) kommt, wobei zunächst eine Lithium-Keimbildung entsteht, bei welcher sich elementares Lithium als nanoskalige Partikel abscheidet und sich dann später zu schwammartigen oder nadelförmigen Dendriten ausbildet. Insbesondere bei niedrigen Temperaturen führt ein hoher Ladestrom verstärkt zur Bildung nadelförmiger Dendriten. Wachsen diese an, können sie Schutzfolien und/oder Trennmembrane der Zellen durchdringen und dadurch die Zelle funktionsunfähig machen. Es ist daher von hohem Interesse, das Entstehen der Dendriten zu verhindern oder entstandene Dendriten einfach entfernen zu können.

In der Offenlegungsschrift DE 10 2011 087 496 A1 wird dazu beispielsweise vorgeschlagen, die Zellen pulsförmig zu laden, wobei der Ladepuls einen Nennladestrom der Gelenkzelle übersteigt, und die Zelle zwischen den Ladepulsen mittels Lastpulsen zu entladen, wobei die Lastpulse kürzer sind als die Ladepulse. Durch das pulsweise Entladen der jeweiligen Zelle wird erreicht, dass Dendriten oder Kristalle, die sich während des Ladevorgangs aufgebaut haben, wieder abgebaut werden. Durch das pulsförmige Entladen erfolgt ein kurzer, aber starker Entladevorgang, der dazu führt, dass die Lithium-Keime, die aufgrund ihrer nanoskaligen Dimension riesige Oberflächen aufweisen, bevorzugt beim Entladen abgebaut werden. Der chemische Vorgang gleicht im Wesentlichen dem Elektropolieren, bei dem durch hohe Ströme metallische Oberflächen geglättet werden. Daher wird im Folgenden auch vom Elektropolieren der Zellen gesprochen. Hierzu wird vorgeschlagen, dass das Ladegerät mit einem Kondensator versehen wird, der zum Entladen während des Lastpulses eingesetzt wird, sowie einen elektrischen Widerstand, mittels dessen der Kondensator entladen wird. Diese Schaltung erlaubt ein gezieltes Entladen der Zellen, wobei durch das Abbauen der schwammartigen oder nadelförmigen Dendriten die Oberfläche insbesondere an der Anode der jeweiligen Zelle wieder hergestellt beziehungsweise poliert wird.

Aus der Offenlegungsschrift WO 2017/014487 A1 ist eine Vorrichtung bekannt, die dazu ausgebildet ist, eine gleichmäßige elektrische Ladungsverteilung auf Energiespeicher einer Speichereinrichtung zu gewährleisten. Hierzu weist die Vorrichtung einen betätigbaren Schalter auf, der in Reihe mit einem Kondensator und einem elektrischen Widerstand parallel zu den Energiespeichern geschaltet ist. Ferner weist die Vorrichtung eine parallel zu dem Kondensator geschaltete Polaritätswechselschaltung auf.

Der Erfindung liegt die Aufgabe zugrunde, eine verbesserte Vorrichtung und ein verbessertes Verfahren zum Elektropolieren bereitzustellen, die auf einfache und kostengünstige Art und Weise das Elektropolieren erlauben, die Lebensdauer des Energiespeichers erhöhen, die Ladezeit verkürzen und das Laden mit höheren Ladeströmen ermöglichen.

Die der Erfindung zugrunde liegende Aufgabe wird durch eine Vorrichtung mit den Merkmalen des Anspruchs 1 gelöst. Diese zeichnet sich dadurch aus, dass sie zumindest einen betätigbaren ersten Schalter aufweist, der in Reihe mit einem Kondensator und einem elektrischen Widerstand zur Strombegrenzung parallel zu zumindest einer Lithium-Ionen-Zelle oder zum Energiespeicher geschaltet ist, wobei parallel zumindest zu dem Kondensator eine Einrichtung zum Entladen des Kondensators geschaltet ist. Die Erfindung sieht also vor, dass dem Kondensator ein elektrischer Widerstand zur Strombegrenzung zugeordnet ist, und dass parallel zum Kondensator eine zusätzliche Einrichtung zum Entladen des Kondensators geschaltet ist. Die erfindungsgemäße Vorrichtung kombiniert somit ein RC-Glied, bei dem der Widerstand den Strom limitiert und der Kondensator dafür sorgt, dass bei einem defekten Schalter keine Überlastung des Widerstands erfolgen kann. Damit werden die Anforderungen an die Robustheit des Schalters selbst reduziert und die Vorrichtung kostengünstig realisiert. Ist der Kondensator entladen, so wird der maximale Strompuls limitiert durch den Widerstand. Hierbei erfährt die Zelle die gewünschten hohen Entladepulse und die Lithium-Keime werden aufgelöst. Nach einer gewissen Zeit lädt sich der Kondensator auf und der Entladestrom sinkt dadurch. Ist der Kondensator voll aufgeladen, steigt der Widerstand ins Unendliche. Durch das Betätigen des Schalters wird der jeweilige Ladeimpuls beziehungsweise der Entladeimpuls geschaltet. Bei dem Schalter handelt es sich insbesondere um einen Halbleiterschalter, der schnell und präzise betätigbar ist. Sobald der Schalter geöffnet wird, wird der Kondensator durch die parallel geschaltete Einrichtung entladen. Dadurch wird der Kondensator vorbereitet für den nächsten Entladevorgang beziehungsweise Entladepuls. Es ergibt sich somit der Vorteil einer besonders sicheren Ladevorrichtung sowie eines vorteilhaften Ladevorgangs für die jeweilige Lithium-lonen-Zelle.

Gemäß einer bevorzugten Weiterbildung der Erfindung ist vorgesehen, dass die Einrichtung einen betätigbaren zweiten Schalter und einen Verbraucher zum Verbrauchen der vom Kondensator gespeicherten Energie aufweist. Durch den zweiten Schalter ist die Einrichtung hinzuschaltbar und ein ungewolltes Entladen des Kondensators ist dadurch sicher verhindert. Durch die Verbraucher wird die vom Kondensator freigegebene Energie verbraucht und beispielsweise in Wärme gewandelt.

Dazu ist bevorzugt vorgesehen, dass der Verbraucher ein elektrischer Widerstand ist, der die vom Kondensator gespeicherte Energie beim Entladen des Kondensators in Wärme wandelt. Dadurch ist eine einfache Entladung des Kondensators möglich, die es erlaubt, dass der Kondensator in kurzer Zeit wieder für den nächsten Elektropoliervorgang zur Verfügung steht.

Weiterhin ist bevorzugt vorgesehen, dass die Einrichtung zumindest eine Freilaufdiode aufweist. Die Freilaufdiode gewährleistet, dass der Strom bei einem Entladen des Kondensators in nur eine Richtung fließt und somit ein unerwünschtes Entladen des Kondensators sicher verhindert ist. Insbesondere ist dadurch ein automatisches Hinzuschalten des Verbrauchers möglich.

Dazu ist bevorzugt vorgesehen, dass die Einrichtung in Reihe geschaltet die Freilaufdiode und den elektrischen Widerstand aufweist, und dass auf den Schalter verzichtet wird. Durch diese schalterfreie Ausbildung der Einrichtung ist ein automatischer Entladevorgang für den Kondensator gegeben, der schnell und ohne separate Mittel zum Ansteuern eines zweiten Schalters auskommt. Dadurch ist die Vorrichtung besonders robust und kostengünstig realisierbar.

Erfindungsgemäß weist die Einrichtung einen ansteuerbaren elektrischen Energiewandler auf, insbesondere einen Gleichstromwandler. Dieser ist insbesondere anstelle der Freilaufdiode, des Verbrauchers und des zweiten Schalters vorgesehen. Der elektrische Energiewandler entlädt bei Bedarf den Kondensator und macht die frei gewordene Energie nutzbar für weitere Verbraucher und/oder Einheiten des elektrischen Antriebsstrangs des Kraftfahrzeugs. Insbesondere ist es mittels des Energiewandlers möglich, die vom Kondensator freigegebene Energie für den Ladevorgang zurückzugewinnen.

Erfindungsgemäß ist dazu vorgesehen, dass der Energiewandler als Gleichspannungswandler ausgebildet ist. Dadurch ergibt sich der Vorteil, dass der zurückgewonnene Energieanteil dem Ladevorgang zugeführt werden kann, und dadurch der zum Elektropolieren verwendete Energieanteil zumindest teilweise zurückgewonnen wird. Hierdurch ergibt sich ein besonders effizientes Verfahren, bei welchem die Entladungsenergie des Kondensators nicht primär in Wärme gewandelt wird.

Weiterhin ist bevorzugt vorgesehen, dass der Energiewandler mit zumindest einer der Lithium-Ionen-Zellen und/oder mit dem Energiespeicher verbunden ist, um die Entladungsenergie des Kondensators in die Lithium-Ionen-Zelle oder den Energiespeicher zurückzuspeisen. Es wird somit vorteilhafterweise die durch die Entladung des Kondensators frei gewordene Energie direkt zurück in den Energiespeicher geführt.

Weiterhin zeichnet sich die Vorrichtung erfindungsgemäß dadurch aus, dass sie ein Steuergerät aufweist, das speziell dazu hergerichtet ist, den zumindest einen Schalter und vorzugsweise den Energiewandler anzusteuern, um eine gewünschte Pulsentladung zum Elektropolieren der Lithium-Ionen-Zelle und/oder des Energiespeichers durchzuführen. Hierdurch ist eine einfache Ansteuerung und Durchführung des Ladevorgangs gewährleistet.

Das erfindungsgemäße Ladegerät mit den Merkmalen des Anspruchs 8 zeichnet sich dadurch aus, dass es für zumindest eine Lithium-Ionen-Zelle des Energiespeichers oder für den Energiespeicher insgesamt jeweils eine erfindungsgemäße Vorrichtung aufweist, mittels welcher der vorteilhafte Entladevorgang zum Elektropolieren der jeweiligen Lithium-Ionen-Zelle durchführbar ist. Ist jeder Lithium-lonen-Zelle eine derartige Vorrichtung zugeordnet, so können die Lithium-Ionen-Zellen separat und besonders präzise entladen werden. Ist die Vorrichtung dem Energiespeicher insgesamt oder einer Gruppe von Lithium-Ionen-Zellen (Batteriemodul) zugeordnet, so werden diese Lithium-Ionen-Zellen gemeinsam durch die Vorrichtung entladen und elektropoliert. Dies ist zwar weniger präzise, führt jedoch zu einer einfacheren und kostengünstigeren Variante des Ladegeräts. Bevorzugt weist das Ladegerät das oben genannte Steuergerät auf, das die eine oder die mehreren Vorrichtungen zum Elektropolieren ansteuert. Das erfindungsgemäße Verfahren mit den Merkmalen des Anspruchs 9 zeichnet sich dadurch aus, dass während eines Ladevorgangs der Energiespeicher mittels des Ladegeräts eine Puls-Entladung zumindest einer Lithium-Ionen-Zelle des Energiespeichers mittels mindestens einer dem Energiespeicher zugeordneten Vorrichtung, wie sie obenstehend beschrieben wurde, durchgeführt wird. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: ein Energiespeichersystem eines Kraftfahrzeugs,
- Figur 2: eine vorteilhafte Vorrichtung zum Elektropolieren von Lithium-Ionen-Zellen des Energiespeichers, die nicht Teil der Erfindung ist,
- Figur 3: ein zweites Ausführungsbeispiel der vorteilhaften Vorrichtung, die nicht Teil der Erfindung ist, und
- Figuren: 4A und 4B ein drittes erfindungsgemäßes Ausführungsbeispiel der vorteilhaften Vorrichtung unc
- Figur 5: ein Flussdiagramm zur Erläuterung eines vorteilhaften Verfahrens zum Betreiben der vorteilhaften Vorrichtung, und
- Figur 6: ein erfindungsgemäßes Anwendungsbeispiel der vorteilhaften Vorrichtung von Figur 4A

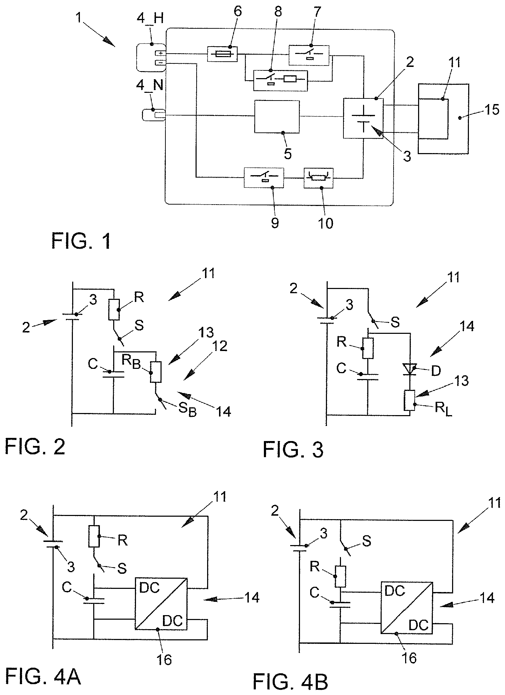

Figur 1 zeigt in einer vereinfachten Darstellung ein Energiespeichersystem 1 eines hier nicht näher dargestellten Kraftfahrzeugs. Das Energiespeichersystem 1 weist einen Energiespeicher 2 auf, der eine oder mehrere Lithium-Ionen-Zellen 3, die in Reihe oder parallel zueinander verschaltet sind, aufweist. Außerdem weist das Energiespeichersystem 1 einen Hochspannungsanschluss 4_H auf, der beispielsweise mit dem elektrischen Antriebsstrang des Kraftfahrzeugs verbindbar ist. Außerdem weist das Energiespeichersystem 1 einen Niedervoltanschluss beziehungsweise Niederspannungsanschluss 4_N auf, der beispielsweise zur Energieversorgung eines Steuergeräts 5 des Energiespeichersystems 1 dient.

Der Energiespeicher 2 ist durch eine Sicherung 6 und einen Hauptschütz 7 mit dem Hochvoltanschluss beziehungsweise Hochspannungsanschluss 4_H verbunden, wobei dem Hauptschütz 7 eine Vorladeschaltung 8 parallel geschaltet ist. Mit dem Negativpol des Hochspannungsanschlusses 4_H ist der Energiespeicher 2 durch einen weiteren Hauptschütz 9 und einen Stromsensor 10 verbunden. Das Steuergerät 5, das auch als Batterie-Management-System dient, überwacht den Energiespeicher 2 und gegebenenfalls auch die Sicherung 6 sowie die Einrichtungen 7, 8, 9 und 10.

Das Aufladen des Energiespeichers 2 wird durch einen vom Batterie-Management-System vorgegebenen Ladestrom geregelt. Um die Ladezeit zu verkürzen, wird der Ladestrom erhöht, was dazu führen kann, dass sich Lithium-Keime und nanoskalige Partikel sich zu schwammartigen oder nadelförmigen Dendriten ausbilden können.

Im Folgenden wird eine in das Energiespeichersystem 1 integrierbare oder von einem Ladegerät zur Verfügung gestellte Vorrichtung 11 in unterschiedlichen Ausführungsbeispielen vorgestellt, die eingesetzt wird, um die Lithium-Ionen-Zellen 3 des Energiespeichers 2 bei Bedarf von den insbesondere nadelförmigen Dendriten zu entfernen. Die vorgestellte Vorrichtung 11 dient somit zum Elektropolieren insbesondere einer Anode der jeweiligen Lithium-lonen-Zelle 3.

Figur 2 zeigt ein erstes Ausführungsbeispiel der Vorrichtung 11 in einer vereinfachten Darstellung. Dem Energiespeicher 2 sind parallel ein Widerstand R sowie ein Kondensator C in Reihe geschaltet, wobei zwischen dem Kondensator C und dem Widerstand R ein betätigbarer Schalter S liegt. Parallel zu dem Kondensator C ist außerdem eine Balancing-Schaltung 12 angeordnet, die einen Balancing-Widerstand R_{B} sowie einen weiteren Schalter S_{B} aufweist.

Die Auslegung der Beschaltung der jeweiligen Lithium-Ionen-Zelle 3 erfolgt in Abhängigkeit der Eigenschaften der Zelle, das heißt ihrer Kapazität, Elektrodenfläche oder Elektrodengröße, die den Kapazitäts- und Widerstandswert der Zelle bestimmt. Durch das RC-Glied aus Widerstand R und Kondensator C, bei welchem der Widerstand R den Stromfluss limitiert und der Kondensator C dafür sorgt, dass bei einem defekten Schalter S keine Überlastung erfolgt, wird bei einem entladenen Kondensator der maximale Strompuls durch den Widerstand R limitiert, sodass der Energiespeicher 2 beziehungsweise die jeweilige Zelle den gewünschten hohen Entladepuls erfährt und dadurch Lithium-Keime aufgelöst werden, wobei sich über gewisse Zeit der Kondensator C auflädt und dadurch der Entladestrom sinkt. Sobald der Kondensator C voll aufgeladen ist, steigt der Widerstand ins Unendliche. Durch Schließen des Schalters S_{B} und Öffnen des Schalters S kann die in dem Kondensator dann gespeicherte Energie über den Balancing-Widerstand Re in Wärme gewandelt und dadurch abgegeben werden. Der Widerstand R_{B} stellt somit einen Verbraucher 13 dar, welcher die in dem Kondensator zwischengespeicherte Energie verbraucht, und dadurch den Kondensator C für den nächsten Entladeimpuls vorbereitet.

Figur 3 zeigt ein zweites Ausführungsbeispiel der Vorrichtung 11. Die Vorrichtung 11 gemäß dem zweiten Ausführungsbeispiel unterscheidet sich von dem vorhergehenden Ausführungsbeispiel dadurch, dass parallel zu dem Kondensator C und dem Widerstand R eine Freilaufdiode D sowie der dazu in Reihe geschaltete Verbraucher 13 parallel geschaltet sind. Der Verbraucher 13 ist in diesem Fall ebenfalls ein Widerstand R_{L}. Der Schalter S ist dabei dem Kondensator C, dem Widerstand R sowie der Diode D und dem Verbraucher 13 vorgeschaltet. Wie auch der Balancing-Widerstand R_{B} und der Schalter S stellen die Diode D und der Verbraucher 13 eine Einrichtung 14 zum Entladen des Kondensators C dar.

Die Vorrichtung 11 mit der Einrichtung 14 gemäß dem zweiten Ausführungsbeispiel hat gegenüber dem ersten Ausführungsbeispiel den Vorteil, dass nach Öffnung des Schalters S die Energie des Kondensators C automatisch durch den Verbraucher 13 abgegeben beziehungsweise abgebaut wird.

Grundsätzlich kann die Vorrichtung 11 in beiden Varianten ausgeführt werden. Bei der Begrenzung der Figur 3 ist der Bedarf an aktiven Bauteilen geringer, jedoch muss dafür das Cell-Balancing über den Kondensator C abgeführt werden, wohingegen bei dem ersten Ausführungsbeispiel das Cell-Balancing unabhängig vom Kondensator C durchführbar ist.

Die Vorrichtung 11 ist bevorzugt in ein Ladegerät 15 integriert, das ein externes Ladegerät darstellt und eine eigene Spannungsversorgung zum Aufladen des Energiespeichers 2 aufweist. Mittels der Vorrichtung 11 ist während des Ladebetriebs der pulsartige Entladevorgang einer oder mehrere Lithium-Ionen-Zellen des Energiespeichers 2 durchführbar, um insbesondere die nadelförmigen Dendriten abzubauen.

Figuren 4A und 4B zeigen weitere Ausführungsbeispiele der Vorrichtung 11, die sich von den vorhergehenden Ausführungsbeispielen dadurch unterscheiden, dass die Einrichtung 14 einen ansteuerbaren Energiewandler 16, vorliegend in Form eines Gleichspannungswandlers, aufweist. Der Gleichspannungswandler 16 ist dabei derart in das Ladegerät 15 oder das Energiesystem 1 integriert, dass er zum einen parallel zu dem Kondensator C geschaltet ist, und zum anderen ausgangsseitig insbesondere mit dem Energiespeicher 2 und/oder einer Lithium-Ionen-Zelle des Energiespeichers 2 verbunden ist, um die vom Kondensator C freigegebene Energie in den Energiespeicher 2 zurückzuführen und dadurch den Ladevorgang zu unterstützen. Der Energiewandler 16 ersetzt dabei den Verbraucher 13 und Schalter S beziehungsweise Diode D und ermöglicht die Rückgewinnung zumindest eines Großteils der für das Elektropolieren genutzten Energie.

Die Ausführungsbeispiele von Figuren 4A und 4B unterscheiden sich lediglich dadurch, dass die Anordnung des Widerstands R und des Schalters S miteinander vertauscht sind. Die Schalter S2 und S1 sowie die Widerstände R sind dabei jeweils gleich dimensioniert.

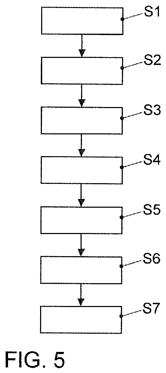

Figur 5 zeigt ein vorteilhaftes Verfahren zum Betreiben des Ladegeräts 15 beziehungsweise der Vorrichtung 11 anhand eines einfachen Flussdiagramms. Das Verfahren wird vorteilhafterweise von einem Regler und insbesondere von dem Steuergerät 5 durchgeführt. Dabei beziehen sich die folgenden Erläuterungen auf das Ausführungsbeispiel der Figur 2. Im ersten Schritt S1 wird der Schalter S geöffnet und dadurch die Balancing-Schaltung deaktiviert. In einem zweiten Schritt S2 wird der Ladestrom i während des Ladevorgangs überwacht. Ist dieser Ladestrom i = 0, wird davon ausgegangen, dass der vorherige Ladepuls beendet ist. Anschließend wird in einem Schritt S3 der Puls-Schalter S eingeschaltet und dadurch der Kondensator C zum Entladen der Lithium-Ionen-Zelle 3 mit dieser verbunden.

Anschließend wird in einem Schritt S4 für die jeweilige Lithium-lonen-Zelle 3 der durch den Kondensator C gebildete Widerstandswert Z zu mehreren Zeitpunkten t₁ bis tₓ erfasst, wobei tₓ den Zeitpunkt darstellt, zu welchem der Kondensator seinen maximalen Widerstand erreicht.

In einem anschließenden Schritt S5 wird dieser Zeitpunkt tₓ mit dem Zeitpunkt, zu welchem der Ladestrom gleich Null wird, verglichen. Insbesondere wird dadurch eine Differenz aus tₓ - t (wenn i = 0) gebildet und mit dem Wert tₓ verglichen. Ist die Differenz größer oder gleich dem Zeitpunkt tₓ, dann wird der Puls-Schalter S wieder deaktiviert beziehungsweise ausgeschaltet und der Balancing-Schalter S_{B} eingeschaltet.

Anschließend wird in einem Schritt S6 geprüft, ob die Zeit des Ladepulses 5 τ entspricht, wobei τ = R_{B} × C entspricht. Wird dies festgestellt, so wird der Balancing-Schalter S_{B} ausgeschaltet.

Anschließend wird in einem Schritt S7 der neue Ladestrom i_{Lad} (t) für den nächsten Ladepuls in Abhängigkeit des aktuellen Widerstandswerts bestimmt und das Ladeverfahren fortgeführt.

Insbesondere erfolgt das Durchführen eines Entladepulses periodisch.

Durch die vorteilhafte Vorrichtung 11 beziehungsweise das Ladegerät 15 sind unterschiedliche Varianten denkbar. Bisher wird davon ausgegangen, dass jeweils eine Vorrichtung 11 zum Elektropolieren an jeweils einer Lithium-Ionen-Zelle 3 angeschlossen ist, sodass die einzelnen Zellen durch die Pulsentladung von gegebenenfalls vorhandenen Dendriten befreibar sind. Alternativ ist es jedoch denkbar, dass die Vorrichtung 11 gleichzeitig mehreren Lithium-Ionen-Zellen 3 zugeordnet ist, um diese gemeinsam zu entladen. Dabei können die mehreren Lithium-Ionen-Zellen 3 beispielsweise ein Modul des Energiespeichers 2 bilden, wobei der Energiespeicher 2 vorzugsweise mehrere derartige Module mit jeweils einer Vorrichtung 11 aufweist. Auch ist es denkbar, die Vorrichtung 11 dem Energiespeicher 2 insgesamt zuzuordnen, um den Entladeprozess beziehungsweise die Elektropolierung bei allen Lithium-lonen-Zellen 3 des Energiespeichers 2 gleichzeitig durchzuführen.

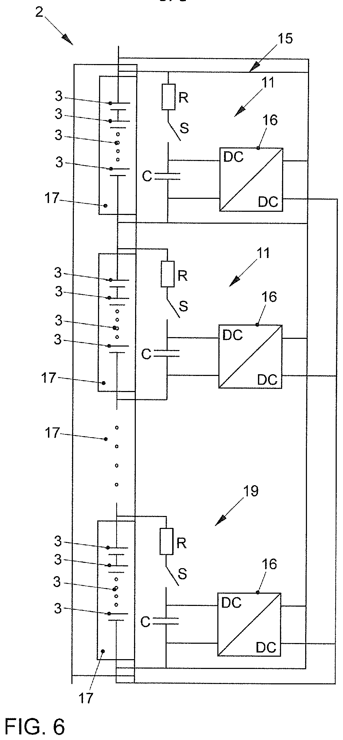

Figur 6 zeigt hierzu in einem Ausführungsbeispiel eine Variante, bei welcher die jeweils eine Vorrichtung 11 einem Modul bestehend aus mehreren Lithium-Ionen-Zellen Z₁ bis Zₙ zugeordnet ist, wobei in diesem Fall die Vorrichtung 11 gemäß dem Ausführungsbeispiel von Figur 4a ausgebildet ist. Der von dem Energiewandler 16 zurückgespeiste Strom wird dabei nicht dem jeweiligen Modul, sondern dem Energiespeicher 2 zugeführt. Alternativ könnte der zurückgeführte Strom auch dem jeweiligen Modul zugeführt werden.

Insgesamt ergeben sich insbesondere die folgenden Varianten:
Gemäß einem Ausführungsbeispiel ist jeder Einzelzelle 3 jeweils eine Vorrichtung 11 gemäß Figur 4A zugeordnet, wobei eine Sekundärseite des Energiewandlers 16 an Plus- und Minuspol der Einzelzelle angeschlossen ist, sodass die Energie direkt der Einzelzelle zurückgespeist wird.

Gemäß einem weiteren Ausführungsbeispiel ist vorgesehen, dass die Vorrichtung 11 jeweils einer Zelle zugeordnet ist, wobei die Sekundärseite des Energiewandlers 16 an Plus- und Minuspol des Batteriemoduls, das mehrere der in Reihe geschalteten Lithium-Ionen-Zellen 3 umfasst, angeschlossen ist, sodass dem Batteriemodul die Energie zurückgeführt wird.

Gemäß einem weiteren Ausführungsbeispiel ist vorgesehen, dass die Vorrichtung 11 jeweils einer Zelle 3 zugeordnet ist, wobei die Sekundärseite des Energiewandlers 16 am Pluspol und Minuspol des Energiespeichers 2 insgesamt angeschlossen ist, wobei der Energiespeicher eine Reihenschaltung von mehreren Einzelzellen 3 umfasst. Die beim Elektropolieren zurückspeisbare Energie jeder Einzelzelle wird somit dem Gesamt-Batteriesystem zurückgeführt. Alternativ weist der Energiespeicher 2 mehrere Batteriemodule mit jeweils mehreren Einzelzellen, die insbesondere in Reihe miteinander verschaltet sind, auf, wobei dann die Energie, wie zuvor beschrieben, dem Energiespeicher, oder aber dem jeweiligen Batteriemodul zurückgespeist wird.

Gemäß einem weiteren Ausführungsbeispiel ist vorgesehen, dass jedem Batteriemodul jeweils eine Vorrichtung 11 zugeordnet ist, wobei die Sekundärseite des jeweiligen Energiewandlers 16 am Plus- und Minuspol des jeweiligen Batteriemoduls angeschlossen ist, sodass die zurückgespeiste Energie dem jeweiligen Batteriemodul zugeführt wird.

Gemäß einem weiteren Ausführungsbeispiel ist vorgesehen, dass jedem Batteriemodul eine Vorrichtung 11 zugeordnet ist, wobei die Sekundärseite des jeweiligen Energiewandlers 16 am Plus- und Minuspol des Energiespeichers 2 angeschlossen ist, sodass die beim Elektropolieren frei gewordene Energie der Batteriemodule in den Energiespeicher 2 insgesamt zurückgespeist wird.

Gemäß einem weiteren Ausführungsbeispiel ist vorgesehen, dass die Vorrichtung 11 dem gesamten Batteriesystem beziehungsweise dem gesamten Energiespeicher 2 zugeordnet ist, wobei die Sekundärseite des einen Energiewandlers 16 dann dem Plus- und Minuspol des Energiespeichers 2 zugeordnet ist, sodass die Energie des Elektropolierens aller Zellen 3 des Energiespeichers 2 dem Batteriesystem beziehungsweise dem Energiespeicher 2 zurückgeführt wird.

Figur 6 zeigt das Ausführungsbeispiel, bei welchem mehrere Einzelzellen 3 zu jeweils einem Batteriemodul 17 zusammengefasst sind, wobei mehrere dieser Batteriemodule 17 in Reihe in dem Energiespeicher 2 geschaltet sind. Jedem Batteriemodul 17 ist dabei eine Vorrichtung 11 zugeordnet, die insbesondere Teil des Ladegeräts 15 sind und, wie zuvor beschrieben, funktionieren. Die Vorrichtungen 11 sind dabei vorliegend gemäß dem Ausführungsbeispiel von Figur 4A ausgebildet. Dabei ist die Sekundärseite des jeweiligen Energiewandlers 16 jeweils mit Plus- und Minuspol des Energiespeichers 2 verbunden, sodass die beim Elektropolieren frei gewordene Energie beim Entladen des Kondensators C dem Energiespeicher 2 insgesamt zurückgespeist wird.

Durch die vorteilhafte Ausbildung der Vorrichtungen 11 beziehungsweise des vorteilhaften Verfahrens wird erreicht, dass die Lebensdauer und die Sicherheit des Energiespeichers 2 durch periodischen Abbau der Lithium-Keime erhöht wird. darüber hinaus wird ein Aufladen des Energiespeichers 2 mit erhöhtem Ladestrom und verkürzter Ladezeit ermöglicht. Durch die längere Nutzbarkeit des Energiespeichers 2 ergeben sich auch Kostenvorteile. Insbesondere bei der Verwendung des Energiewandlers 16 in der Vorrichtung 11 ergeben sich Energieverluste, die beim Elektropolieren minimiert werden.

Vorteilhafterweise entspricht die Zeit der gesamten Entladepulse 0 bis 50 % der Ladezeit, bevorzugt 0,01 % bis 25 %, besonders bevorzugt 0,05 % bis 10 %, und insbesondere 0,1 % bis 5 %. Die Anzahl der Entladepulse beträgt bevorzugt 1 bis 5, insbesondere 2 bis 20, besonders bevorzugt 5 bis 100, vorzugsweise 10 bis 1000. Die Entladungspulsdauer beträgt bevorzugt 0,001 s bis 30 s, insbesondere 0,005 s bis 10 s, besonders bevorzugt 0,01 s bis 5 s und insbesondere 0,02 s bis 2 s.

### Bezugszeichenliste

- 1: Energiespeichersystem
- 2: Energiespeicher
- 3: Lithium-Ionen-Zelle
- 4_H: Hochspannungsanschluss
- 4_N: Niederspannungsanschluss
- 5: Steuergerät
- 6: Sicherung
- 7: Hauptschütz / Einrichtung
- 8: Einrichtung
- 9: Einrichtung
- 10: Einrichtung
- 11: Vorrichtung
- 12: Balancing-Schaltung
- 13: Verbraucher
- 14: Einrichtung
- 15: Ladegerät
- 16: Energiewandler
- 17: Batteriemodul

- R: Widerstand
- R_{B}: Widerstand
- R_{L}: Widerstand
- C: Kondensator
- D: Freilaufdiode
- S: Schalter
- S_{B}: Schalter

## Patentansprüche

1. Vorrichtung (11) zum Elektropolieren eines zumindest eine Lithium-Ionen-Zelle (3) aufweisenden Energiespeichers (2), mit zumindest einem betätigbaren ersten Schalter (S), der in Reihe mit einem Kondensator (C) und einem elektrischen Widerstand (R) zur Strombegrenzung parallel zu zumindest einer Lithium-Ionen-Zelle (3) schaltbar ist, wobei parallel zumindest zu dem Kondensator (C) eine Einrichtung (14) zum Entladen des Kondensators (C) geschaltet ist, wobei die Einrichtung (14) einen ansteuerbaren elektrischen Energiewandler (16) aufweist, der als Gleichspannungswandler ausgebildet ist, und mit einem Steuergerät (5), das speziell dazu hergerichtet ist, wenn die Vorrichtung mit der Lithium-Ionen-Zelle verbunden ist, den zumindest einen Schalter (S) anzusteuern, um eine Pulsentladung zum Elektropolieren der Lithium-Ionen-Zelle (3) und/oder des Energiespeichers (2) so durchzuführen, dass Lithium-Keime, -Dendriten und/oder -Kristalle durch die Pulsentladung abgebaut werden.

2. Vorrichtung nach Anspruch 1, **dadurch gekennzeichnet, dass** die Einrichtung (14) einen betätigbaren zweiten Schalter (S_{B}) und einen Verbraucher (13) zum Verbrauchen der von dem Kondensator (C) gespeicherten Energie aufweist.

3. Vorrichtung nach einem der vorhergehenden Ansprüche, **dadurch gekennzeichnet, dass** der Verbraucher (13) einen elektrischen Widerstand (R_{B};R_{L}) zum Wandeln der vom Kondensator (C) gespeicherten Energie in Wärme aufweist.

4. Vorrichtung nach einem der vorhergehenden Ansprüche, **dadurch gekennzeichnet, dass** die Einrichtung (14) zumindest eine Freilaufdiode (D) aufweist.

5. Vorrichtung nach einem der vorhergehenden Ansprüche, **dadurch gekennzeichnet, dass** die Einrichtung (14) in Reihe geschaltet nur die Freilaufdiode (D) und den elektrischen Widerstand (R_{L}) aufweist.

6. Vorrichtung nach einem der vorhergehenden Ansprüche, **dadurch gekennzeichnet, dass** der Energiewandler (16) mit seiner Sekundärseite mit zumindest einer Lithium-Ionen-Zelle (3) verbunden ist, um eine Entladungsenergie des Kondensators (C) in die Lithium-Ionen-Zelle (3) zurück zu speisen.

7. Vorrichtung nach einem der vorhergehenden Ansprüche, **dadurch gekennzeichnet, dass** das Steuergerät (5) speziell dazu hergerichtet ist, den Schalter (S_{B}) und/oder den Energiewandler (16) anzusteuern, um die Pulsentladung zur Elektropolierung durchzuführen.

8. Ladegerät zum elektrischen Aufladen eines mehrere Lithium-Ionen-Zellen (3) aufweisenden Energiespeichers (2), **dadurch gekennzeichnet, dass** es für zumindest eine der Lithium-Ionen-Zellen (3) jeweils eine Vorrichtung (11) nach einem der Ansprüche 1 bis 7 aufweist.

9. Verfahren zum Betreiben des Ladegeräts gemäß Anspruch 8, **dadurch gekennzeichnet, dass** während des Ladevorgangs eines Energiespeichers (2) mittels des Ladegeräts (15) eine Puls-Entladung zumindest einer Lithium-Ionen-Zelle (3) des Energiespeichers (2) mittels mindestens einer dem Energiespeicher (2) zugeordneten Vorrichtung (11) so durchgeführt wird, dass Lithium-Keime, -Dendriten und/oder-Kristalle durch die Pulsentladung abgebaut werden.

## Claims

1. Device (11) for electropolishing an energy storage device (2) comprising at least one lithium ion cell (3), comprising at least one actuatable first switch (S) that is connectable in series with a capacitor (C) and an electrical resistor (R) for current limitation, and in parallel to the at least one lithium ion cell (3), wherein an apparatus (14) for discharging the capacitor (C) is connected in parallel at least to the capacitor (C), wherein the apparatus (14) comprises a controllable energy converter (16) that is designed as a direct current converter, and a control unit (5) that is configured to control the at least one switch (S) in order to carry out a pulse discharge for electropolishing the lithium ion cell (3) and/or the energy storage device (2) when the device is connected to the lithium ion cell in such a way that lithium nucleation seeds, dendrites, and/or crystals are broken down by the pulse discharge.

2. Device according to claim 1, **characterized in that** the apparatus (14) comprises an actuatable second switch (S_{B}) and a consumer (13) for using the energy stored by the capacitor (C).

3. Device according to any one of the preceding claims, **characterized in that** the consumer (13) comprises an electrical resistor (R_{B}; R_{L}) for converting the energy stored by the capacitor (C) into heat.

4. Device according to any one of the preceding claims, **characterized in that** the apparatus (14) comprises at least one freewheeling diode (D).

5. Device according to any one of the preceding claims, **characterized in that** the apparatus (14) comprises only the freewheeling diode (D) and the electrical resistor (R_{L}) connected in series.

6. Device according to any one of the preceding claims, **characterized in that** the energy converter (16) with its secondary side is connected to at least one lithium ion cell (3) in order to feed discharge energy of the capacitor (C) back into the lithium ion cell (3).

7. Device according to any one of the preceding claims, **characterized in that** the control unit (5) is configured to control the switch (S_{B}) and/or the energy converter (16) in order to carry out the pulse discharge for electropolishing.

8. Charger for electrically charging an energy storage device (2) comprising multiple lithium ion cells (3), **characterized in that** it comprises a device (11) according to one of claims 1 to 7 for at least one of the lithium ion cells (3), respectively.

9. Method for operating the charger according to claim 8, **characterized in that** during the charging operation of an energy storage device (2) by means of the charger (15), a pulse discharge of at least one lithium ion cell (3) of the energy storage device (2) is carried out by at least one device (11) assigned to the energy storage device (2) in such a way that lithium nucleation seeds, dendrites, and/or crystals are broken down by the pulse discharge.

## Revendications

1. Dispositif (11) d'électro-polissage d'un accumulateur d'énergie (2) présentant au moins une cellule lithium-ion (3), avec au moins un premier commutateur actionnable (S) qui peut être commuté en série à un condensateur (C) et à une résistance électrique (R) servant à limiter le courant parallèlement à au moins une cellule lithium-ion (3), dans lequel un dispositif (14) pour décharger le condensateur (C) est commuté parallèlement au moins au condensateur (C), dans lequel le dispositif (14) présente un convertisseur d'énergie électrique (16) pouvant être commandé qui est conçu comme un convertisseur continu-continu, et avec un dispositif de commande (5) qui est spécialement aménagé, lorsque le dispositif est relié à la cellule lithium-ion, pour commander le au moins un commutateur (S), pour effectuer une décharge d'impulsions pour l'électro-polissage de la cellule lithium-ion (3) et/ou de l'accumulateur d'énergie (2) de sorte que des germes, des dendrites et/ou des cristaux de lithium sont décomposés par la décharge d'impulsions.

2. Procédé selon la revendication 1, **caractérisé en ce que** le dispositif (14) présente un deuxième commutateur actionnable (SB) et un consommateur (13) pour consommer l'énergie accumulée par le condensateur (C).

3. Dispositif selon l'une des revendications précédentes, **caractérisé en ce que** le consommateur (13) présente une résistance électrique (RB ; RL) pour convertir en chaleur l'énergie accumulée par le condensateur (C).

4. Dispositif selon l'une des revendications précédentes, **caractérisé en ce que** le dispositif (14) présente au moins une diode de roue libre (D).

5. Dispositif selon l'une des revendications précédentes, **caractérisé en ce que** le dispositif (14) commuté en série présente uniquement la diode de roue libre (D) et la résistance électrique (RL).

6. Dispositif selon l'une des revendications précédentes, **caractérisé en ce que** le convertisseur d'énergie (16) est relié par son côté secondaire à au moins une cellule lithium-ion (3) pour alimenter en retour une énergie de décharge du condensateur (C) dans la cellule lithium-ion (3).

7. Dispositif selon l'une des revendications précédentes, **caractérisé en ce que** le dispositif de commande (5) est spécialement aménagé pour commander le commutateur (SB) et/ou le convertisseur d'énergie (16), afin de réaliser la décharge d'impulsions aux fins d'électro-polissage.

8. Appareil de charge pour le chargement électrique d'un accumulateur d'énergie (2) présentant plusieurs cellules au lithium-ion (3), **caractérisé en ce qu'**il présente pour au moins l'une des cellules au lithium-ion (3) à chaque fois un dispositif (11) selon l'une des revendications 1 à 7.

9. Procédé de fonctionnement de l'appareil de charge selon la revendication 8, **caractérisé en ce que** pendant le processus de charge d'un accumulateur d'énergie (2) au moyen de l'appareil de charge (15), une décharge d'impulsions d'au moins une cellule lithium-ion (3) de l'accumulateur d'énergie (2) est réalisée au moyen d'au moins un dispositif (11) affecté à l'accumulateur d'énergie (2) de sorte que des germes, des dendrites et/ou des cristaux de lithium sont décomposés par la décharge d'impulsions.
